# FASCICULE DE BREVET EUROPEEN

(11) **EP 2 710 346 B1**
(45) Date de publication et mention de la délivrance du brevet: **11.03.2015**
(21) Numéro de dépôt: 12741034.8
(22) Date de dépôt: 27.06.2012
(51) Int. Cl.: G01N 1/20, G01N 21/78

(54) **DISPOSITIF MICROFLUIDIQUE POUR ANALYSER UN FLUIDE SOUS PRESSION**
MIKROFLUIDISCHE VORRICHTUNG ZUR ANALYSE EINER DRUCKFLÜSSIGKEIT
MICROFLUIDIC DEVICE FOR ANALYZING A PRESSURIZED FLUID

(30) Priorité: 13.10.2011 FR 1159278
(43) Date de publication de la demande: 26.03.2014
(73) Titulaire: Chambre de Commerce et de l'Industrie de Paris au Titre de son Etablissement d'Enseignement Supérieur ESIEE Paris, 93162 Noisy le Grand (FR); EFS SA, 69700 Montagny (FR)
(72) Inventeur: ANGELESCU, Dan, Eugen, F-94170 Le Perreux sur Marne (FR); FREYERMUTH, Pierre, F-69310 Pierre Bénite (FR)
(74) Mandataire: Le Goff, Robin
(86) Numéro de dépôt international: PCT/FR2012/051484
(87) Numéro de publication internationale: WO 2013/054014

(56) Documents cités:
- US-A- 4 837 161
- US-A- 6 007 235
- US-A1- 2002 041 832
- US-A1- 2002 187 074
- US-A1- 2007 242 269
- US-A1- 2008 094 627
- US-A1- 2008 145 275
- US-A1- 2009 016 672
- US-A1- 2010 155 577
- US-B2- 7 799 278
- AUROUX P-A ET AL: "Micro total analysis systems. 2. Analytical standard operations and applications", ANALYTICAL CHEMISTRY, AMERICAN CHEMICAL SOCIETY, US, vol. 74, no. 12, 15 juin 2002 (2002-06-15) , pages 2637-2652, XP002339167, ISSN: 0003-2700, DOI: 10.1021/AC020239T

## Description

La présente invention se rapporte à un capteur microfluidique pour analyser un fluide présent dans un conduit sous pression.

Elle trouve une application particulièrement intéressante dans le domaine de la surveillance et de l'analyse en continu de la qualité d'eau potable dans des réseaux de distribution, dans des usines de traitement de l'eau ou dans des machines ou instruments utilisés pour le traitement et la purification de l'eau. Mais la présente invention est d'un cadre plus large puisqu'elle peut s'appliquer à la mesure de différents paramètres physiques ou électro-chimiques d'un fluide présent dans un conduit sous pression.

Le contrôle de la qualité de l'eau en ligne est devenu un aspect très important tant pour la sécurité que pour des raisons de santé, et des efforts multiples sont dirigés dans le sens de la création d'appareils qui peuvent fournir des accès en temps réel à des données sur la qualité de l'eau. L'industrie de l'eau est généralement soumise à des pressions de coûts: des dispositifs de contrôle doivent être relativement peu coûteux à fabriquer, leur entretien ne doit pas impliquer des tâches trop intenses pour le personnel, et doit être réduit au minimum. Naturellement on privilégie des solutions de capteurs qui peuvent être surveillés à moindre coût, de préférence en utilisant des technologies sans fil à distance. La maintenance devant s'effectuer à des moments espacés, les capteurs doivent donc être autonomes pendant de longues périodes de temps, ce qui réduit automatiquement le nombre de technologies de détection disponibles.

Un aspect critique du contrôle en ligne de la qualité de l'eau implique des mesures de concentration de chlore. Le chlore est utilisé partout dans le monde comme un purificateur d'eau et un désinfectant pour prévenir la propagation de maladies hydriques, et son contrôle à la fois dans les usines de traitement d'eau et à différents points dans le réseau de distribution d'eau est très important pour s'assurer, d'une part, que l'eau délivrée a une qualité élevée et constante, et, d'autre part, d'être capable de détecter les sources possibles de contamination du réseau d'eau. La concentration de chlore, tout en étant reconnu comme le paramètre de qualité de l'eau le plus pertinent, n'est pas contrôlée en utilisant les mêmes méthodes partout. En particulier, il y a des pays où la réglementation exige que la teneur en chlore total soit contrôlée - ce qui inclut à la fois le chlore libre et le chlore qui a déjà réagi avec les composés organiques dans une réaction d'oxydation, et il y a des pays où seul la teneur en chlore libre (ou disponible) doit être signalée. Un capteur pour le contrôle en ligne de la concentration de chlore a par conséquent besoin de détecter les deux types de chlore s'il doit être déployé dans le monde entier.

On connaît le document US7799278 ou le document US6007235A décrivant un capteur comprenant un boîtier submersible et un substrat en partie à l'extérieur du boîtier pour récupérer le fluide à analyser et le transférer vers un moyen d'analyse qui se trouve à l'intérieur du boîtier. Dans ce document US7799278, le boîtier est complètement plongé dans le fluide à mesurer. Au moins un réactif est à la même pression que le fluide à analyser. Dans un cas, une pompe est prévue pour faire circuler le fluide du substrat vers le boîtier. Les orifices d'entrée et de sortie sont à la même pression. Dans le document US6007235A, le capteur comprend un canal de prélèvement pour prélever une quantité de fluide dans le conduit. Le système proposé dans ce document ou dans US7799278 US6007235A est encombrant, reste très invasif et implique de nombreuses contraintes d'étanchéité puisqu'il est complètement submersible.

La présente invention a pour but un capteur microfluidique doté d'une grande autonomie.

Un autre but de l'invention est un capteur microfluidique économe en consommation de réactif.

L'invention a encore pour but un capteur peu invasif avec un haut niveau de sûreté.

On atteint au moins l'un des objectifs précités avec un dispositif microfluidique pour analyser un fluide présent dans un conduit sous une première pression. Ce dispositif comprend :
- un mélangeur pour mélanger une quantité de fluide provenant du conduit avec au moins une quantité de réactif provenant d'au moins un réservoir, et
- un analyseur pour analyser le mélange ainsi constitué.

Ce dispositif comprend en outre un canal de prélèvement pour prélever une quantité de fluide dans le conduit, pour alimenter le mélangeur et pour mettre sous pression ledit au moins un réservoir. Avantageusement, un orifice de sortie de l'analyseur est soumis à une seconde pression inférieure à la première pression dans le conduit, de sorte que le fluide transite de manière passive depuis le conduit, d'une part vers l'analyseur via le mélangeur, et d'autre part vers ledit au moins un réservoir.

Le dispositif selon l'invention peut constituer un capteur dans lequel on évite l'utilisation de pompe pour véhiculer le fluide. On se sert avantageusement de la différence de pression entre la pression dans le conduit et la pression de l'orifice de sortie pour que le fluide soit « aspiré » naturellement depuis le conduit vers l'analyseur. On peut ainsi dire que le dispositif est passif. Il consomme peu d'énergie, ce qui permet un fonctionnement autonome in situ sur une longue période. Le dispositif peut être alimenté en courant via le secteur ou de préférence au moyen d'une batterie interne reliée au moins à l'analyseur et à d'autres organes à commander comme des vannes.

En particulier, un tel dispositif microfluidique comporte un réservoir de réactif chimique miniaturisé. Cela permet à la fois de faire une mesure fiable utilisant peu de réactif chimique et ne nécessitant pas de maintenance coûteuse. Ce dispositif peut ainsi être déployé dans des endroits lointains pour effectuer une mesure en continu du chlore par exemple, ou d'un autre paramètre chimique. En utilisant la pression du système comme source de pression pour pousser le fluide dans les microcanaux, le capteur proposé permet de réaliser une configuration qui est intrinsèquement sûre : il n'y a pas de possibilité de contamination du réseau d'eau notamment avec les réactifs chimiques. En effet, le conduit selon l'invention peut être un conduit du réseau de distribution d'eau potable par exemple qui est sous pression, le déplacement du fluide dans le capteur se fait grâce à la différence de pression entre le milieu à surveiller et l'extérieur au conduit. Ce milieu extérieur au conduit peut avantageusement être l'atmosphère ambiant ; la dite seconde pression étant alors la pression atmosphérique. Cette configuration assure le fait que le réactif chimique ne peut pas pénétrer dans le conduit d'eau et confère ainsi une sûreté intrinsèque au capteur.

Le capteur selon l'invention est en outre remarquable par le fait qu'on peut utiliser un unique canal de prélèvement pour alimenter à la fois le réservoir de réactif et le mélangeur. Ainsi, ces deux composants (réservoir de réactif et mélangeur) sont soumis à une même source de pression.

Selon une caractéristique avantageuse de l'invention, le canal véhiculant le fluide vers le mélangeur et le canal véhiculant le réactif du réservoir vers le mélangeur, sont conformés, c'est-à-dire présentent une géométrie ou sont dimensionnés, de telle sorte que les proportions de mélange entre le fluide et le réactif du réservoir sont prédéterminées.

Le dimensionnement des canaux permet notamment d'imposer un rapport de débit entre les canaux alimentant le mélangeur. On définit ainsi précisément la quantité de réactif à utiliser pour une quantité de fluide donnée.

Selon une caractéristique avantageuse de l'invention, le dispositif selon l'invention comprend au moins une première vanne dans un canal du réservoir et une seconde vanne dans un canal de sortie menant vers l'orifice de sortie de l'analyseur. La première vanne est disposée dans la voie contenant le réservoir de réactif, en amont ou de préférence en aval de ce réservoir c'est-à-dire dans le canal reliant le réservoir au reste du dispositif de réactif. Lorsque disposée en aval, la première vanne se trouve entre le réservoir et le mélangeur. Cette première vanne permet de bloquer l'alimentation du mélangeur en réactif. Dans ce cas, le fluide peut s'écouler depuis le conduit via le mélangeur jusque vers un orifice de sortie afin de réaliser par exemple un rinçage sans réactif.

La seconde vanne, positionnée notamment en sortie du dispositif, permet de bloquer la circulation du fluide dans le dispositif qui reste sous pression.

Le dispositif selon l'invention peut en outre comprendre, en complément ou indépendamment de la première et de la seconde vanne, une troisième vanne dans le conduit de prélèvement pour également contrôler le flux dans le conduit de prélèvement. Cette troisième vanne permet par exemple d'éviter que le dispositif reste constamment sous la pression du conduit.

De préférence, l'analyseur est une cellule optique. D'autres types d'analyseurs peuvent être utilisés à la place ou en complément de la cellule optique.

On peut utiliser en outre un débitmètre, un capteur électrochimique, un capteur mécanique de type MEMS (« microelectromechanical system »), un capteur de conductivité disposé par exemple sur le canal de prélèvement, ou tout autre type de capteur ou système de mesure pour le liquide en question.

En utilisant une cellule optique comme analyseur, on utilise le capteur microfluidique décrit dans la présente invention selon le principe d'une réaction chimique en particulier pour la mesure du chlore. Le fluide, tel que l'eau par exemple, est mélangé avec le réactif chimique tel que par exemple le diéthyl-p-phénylènediamin ou DPD, et subit un changement de couleur dont l'intensité est liée à la concentration de chlore dans l'eau. En réalisant une mesure d'absorption optique dans un micro module optique, à une longueur d'onde correspondant au maximum d'absorption du DPD, on calcule une densité optique du mélange et on en déduit la concentration du chlore. Des réactifs existent pour la mesure du chlore total ou juste du chlore libre. Des réactifs existent pour la mesure d'autres paramètres chimiques, comme le pH, le contenu ionique,... Le capteur selon l'invention ne se limite donc nullement à la mesure du chlore et peut aisément être adapté par l'homme du métier pour la mesure d'autres paramètres chimiques en adaptant, remplaçant ou complétant la cellule optique et les réactifs utilisés.

La mesure du paramètre chimique peut se faire de façon continue ou par mesures ponctuelles, chaque mesure ponctuelle faisant intervenir une gestion intelligente des vannes pour alimenter l'analyseur, réaliser la mesure, rincer et passer en mode de repos où le fluide ne circule plus.

Selon un mode de réalisation de l'invention, la cellule optique peut comprendre au moins :
- une source de lumière filtrée,
- une cavité optique formée à partir d'un matériau transparent et véhiculant le mélange, comme par exemple une cavité rectangulaire, un canal transparent, un serpentin, ou une cavité d'autre forme permettant a la lumière de traverser une épaisseur connue de liquide, et
- un détecteur large bande.

Selon un autre mode de réalisation, la cellule optique peut comprendre au moins :
- une source de lumière filtrée,
- des moyens pour guider la lumière depuis la source vers une cavité optique d'une puce microfluidique (comme par exemple une cavité rectangulaire, un canal transparent, un serpentin, ou une cavité d'autre forme permettant à la lumière de traverser une épaisseur connue de liquide), cette cavité contenant le mélange,
- un détecteur large bande, et
- des moyens pour guider la lumière depuis la puce microfluidique vers le détecteur large bande.

Dans ce cas, les moyens pour guider la lumière peuvent comprendre l'un ou une combinaison des éléments suivants :
- fibre optique,
- guide d'onde obtenu par microfabrication, et
- guide d'onde liquide.

Selon un autre mode de réalisation, la cellule optique peut comprendre au moins :
- une source de lumière large bande,
- une cavité optique (par exemple une cavité rectangulaire, un canal transparent, un serpentin, ou une cavité d'autre forme permettant à la lumière de traverser une épaisseur connue de liquide) formé à partir d'un matériau transparent et véhiculant le mélange, et
- un détecteur associé à un filtre donné.

On peut ainsi disposer plusieurs détecteurs associés chacun à un filtre donné pour la détection d'un paramètre donné.

Selon encore un autre mode de réalisation, la cellule optique peut comprendre au moins :
- une source de lumière large bande,
- une cavité optique (par exemple une cavité rectangulaire, un canal transparent, un serpentin, ou une cavité d'autre forme permettant à la lumière de traverser une épaisseur connue de liquide) formé à partir d'un matériau transparent et véhiculant le mélange,
- un monochromateur, et
- un détecteur large bande.

Dans ce cas, le monochromateur permet de sélectionner une longueur d'onde spécifique pour la mesure d'un paramètre donné. Ce monochromateur peut être, par exemple non limitatif, un réseau de diffraction, et/ou une roue à filtres.

Avec le dispositif selon l'invention, on peut avantageusement implémenter plusieurs réservoirs de réactifs associés ou non à des vannes de façon à sélectionner une ou une combinaison de réactifs. Chaque canal contenant un réservoir peut être dimensionné de façon spécifique pour imposer un débit donné. Lorsque le dispositif comporte plusieurs réservoirs, ils peuvent être disposés en parallèle.

Selon un mode de réalisation de l'invention, ledit au moins un réservoir de réactif est de type piston. Dans ce cas, le réactif est poussé par le piston qui est lui-même poussé par le fluide provenant directement du canal de prélèvement.

Selon un mode de réalisation de l'invention, ledit au moins un réservoir de réactif est de type membrane souple, ou de type sachet souple. De la même manière que précédemment, le réactif est provisionné en fonction de la pression exercée par le fluide provenant du canal de prélèvement.

De préférence, le mélangeur est un micro-mélangeur passif de sorte qu'il n'est pas alimenté en courant et donc ne consomme pas d'énergie. Plusieurs exemples de tels micro-mélangeurs existent, par exemple ceux cités dans les références suivantes: P.-A. Auroux et al. Anal. Chem. 74, p. 2637 (2002) ou West, Becker, Tombrink and Manz, Anal. Chem. 80, 4403 (2008).

Selon une caractéristique avantageuse de l'invention, le dispositif peut comprendre en outre un réservoir de décharge situé à un orifice de sortie de l'analyseur. Avec l'utilisation des procédés de micro-fabrication, le capteur microfluidique selon l'invention peut comporter au moins un réservoir de réactifs miniaturisé. On utilise ainsi des doses infimes (pouvant aller de quelques nl à une fraction de microlitre) de réactifs chimiques à chaque mesure, ce qui procure au capteur une autonomie importante, et réduit les coûts dus à la consommation de réactifs chimiques. En outre, avec l'utilisation de quantités infimes de réactifs et d'échantillons, le problème d'évacuation du fluide prélevé lors d'une mesure est minimisé : des mesures peuvent se faire pendant des années avec un réservoir de décharge de taille relativement modeste.

De préférence, le canal de prélèvement comporte une extrémité insérée dans le conduit de manière étanche, le reste du dispositif étant disposé à l'extérieur du conduit. Cette extrémité présente un orifice qui aspire le fluide sous pression. Avantageusement, un filtre sous forme d'une grille par exemple est disposé à cet orifice pour empêcher que des impuretés viennent obstruer le canal de prélèvement ou le reste du capteur.

Bien entendu, les différentes caractéristiques, formes et variantes de réalisation de l'invention peuvent être associées les unes avec les autres selon diverses combinaisons dans la mesure où elles ne sont pas incompatibles ou exclusives les unes des autres.

D'autres avantages et caractéristiques de l'invention apparaîtront à l'examen de la description détaillée d'un mode de mise en oeuvre nullement limitatif, et des dessins annexés, sur lesquels :
La figure 1 est une vue schématique illustrant le principe de base d'un capteur microfluidique selon l'invention ;
La figure 2 est une vue schématique illustrant un capteur microfluidique selon l'invention faisant apparaître un module électronique pour le contrôle de différents composants électroniques ;
La figure 3 est une vue schématique illustrant un analyseur optique utilisé dans le capteur microfluidique selon l'invention.

Bien que l'invention n'y soit pas limitée, on va maintenant décrire un capteur microfluidique pour la surveillance de la qualité de l'eau. Pour ce faire, on prélève de manière passive un échantillon d'eau depuis un conduit sous pression. On mélange ensuite cet échantillon d'eau avec une infime quantité de réactif chimique, le mélange est ensuite envoyé vers un analyseur optique pour la détection du chlore par exemple. Le cheminement du fluide est dit passif car ce fluide circule entre un conduit sous pression jusqu'à un orifice de sortie soumis à une pression inférieure à celle du conduit, sans utilisation de pompe; typiquement en sortie il s'agit de la pression atmosphérique.

Un capteur microfluidique peut comprendre des canaux sub-millimétriques, avec des diamètres allant typiquement de 10 à 100 micromètres. Un tel capteur peut intégrer différents types d'actionneurs et de capteurs de façon à créer des systèmes complexes de détection et de manipulation fluidique (Thorsen et al., Science 298, 580 (2002), Psaltis et al., Nature, 442, 381 (2006)). Des systèmes microfluidiques ont été récemment utilisés dans une variété d'applications, notamment la biotechnologie, la pharmacie et la chimie analytique (Stone and Kim, AIChE Journal, vol 47, 6, 1250 (2001), Ohno Tachikawa and Manz, Electrophoresis vol 29, p. 4443 (2008), West, Becker, Tombrink and Manz, Anal. Chem. 80, 4403 (2008)).

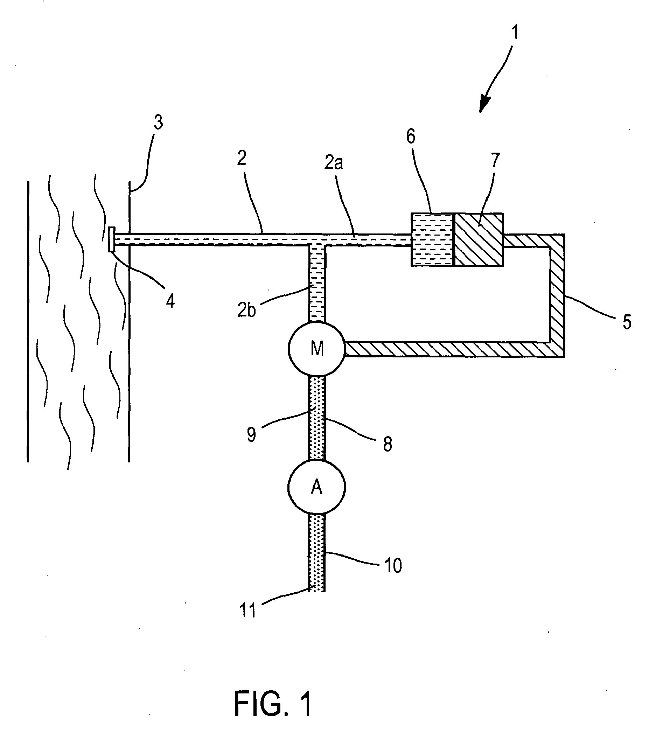

Sur la figure 1 on voit un capteur microfluidique 1 connecté à un conduit 3 dans lequel circule de l'eau sous une pression de 5 bars par exemple. De façon générale, il s'agit d'un conduit alimentant des habitations en eau potable. La mise sous pression de cette eau permet une distribution naturelle dans les foyers.

Le capteur microfluidique 1 comprend un canal de prélèvement 2 dans lequel circule l'eau provenant du conduit 3. Dans l'exemple illustré sur la figure 1, on distingue un unique canal de prélèvement 2 ayant une première extrémité insérée de façon étanche à travers la paroi à l'intérieur du conduit 3. L'eau prélevée est filtrée au moyen d'un filtre 4 avant de pénétrer dans le capteur microfluidique, ce filtre étant sous forme de grille ou de membrane poreuse, disposé sur l'orifice à la première extrémité du canal de prélèvement 2. Cela permet de ne pas boucher les canaux microfluidiques.

Ce canal de prélèvement 2 alimente ensuite directement en parallèle un mélangeur passif M et un réservoir 6. Pour ce faire, le canal 2 comporte deux bras, un premier bras 2b alimentant le mélangeur passif M, le second bras 2a alimentant le réservoir 6.

Le réservoir 6 est un réservoir renfermant un réactif chimique 7 tel que le DPD pour la détection du chlore. Ce réservoir comprend un piston ou une membrane souple ou encore un sac scellé subissant la pression de l'eau provenant du canal de prélèvement 2. Avec le capteur microfluidique selon l'invention, le réservoir contenant le réactif chimique 7 et le mélangeur passif M subissent une pression dont la source est unique : le conduit 3.

L'eau et le réactif chimique 7 sont combinés au sein du mélangeur passif M. L'eau pour le mélange est directement amenée par le canal de prélèvement 2 et le bras 2b, tandis que le réactif chimique est amené par un canal 5 disposé entre le réservoir et le mélangeur M. Ce mélangeur passif M est une structure qui assure le mélange des différentes entrées de fluide, résultant en un fluide bien mélangé à la sortie. La concentration du réactif chimique 7 peut être contrôlée à l'aide de constrictions hydrauliques réalisées dans les canaux 2b et 5, respectivement. La viscosité du fluide et la résistance hydrodynamique imposée par ces constrictions définissent le débit des fluides respectifs via les canaux 2b et 5 emmenant respectivement l'eau et le réactif chimique dans le mélangeur M, le canal 2b étant une branche du canal 2 alimentant directement le mélangeur M. La concentration requise du réactif chimique peut donc être imposée et contrôlée par le design des canaux. Ces constrictions consistent à définir la géométrie des canaux 2b et 5 de telle sorte que le rapport entre la proportion d'eau et la proportion de réactif utilisé lors d'une mesure est prédéterminé. Ces constrictions peuvent également être implémentées à l'intérieur du mélangeur M. La sortie du mélangeur M est reliée à un canal 8 véhiculant le mélange 9 qui est le fluide issu du mélange entre l'eau et le réactif chimique 7 dans le mélangeur. Ce mélange 9 pénètre ensuite un analyseur A prévu pour détecter notamment la présence de chlore ou d'un autre produit chimique. Cela peut se faire, par exemple, par une mesure colorimétrique ou spectroscopique. Il est possible que le mélangeur M et l'analyseur A soient réalisés sur le même substrat microfluidique, ou sur la même puce.

Avec le capteur microfluidique tel qu'illustré sur la figure 1, il est possible de réaliser des mesures en continu in situ de façon manuelle ou automatisée.

La sortie de l'analyseur A est reliée à un conduit 10 dont l'orifice de sortie 11 est à la pression atmosphérique, c'est-à-dire une pression inférieure à celle présente dans le conduit. Cette différence de pression autorise une circulation passive (non poussée par des moyens actifs tels une pompe) depuis le canal de prélèvement 2 jusqu'à l'orifice de sortie 11. L'eau et/ou le réactif chimique circulent dans les canaux 2, 2a, 2b, 5, 8 et 10. Ces canaux communiquent directement ou indirectement entre eux de telle sorte qu'il se crée une « chaîne » ou un gradient de pression entre le filtre 4 au sein du conduit et l'orifice de sortie 11.

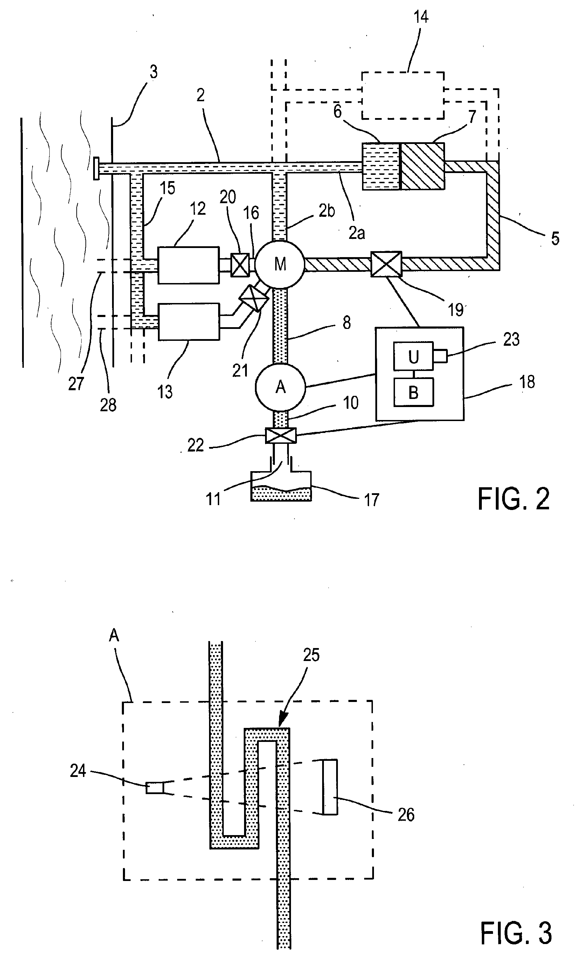

Sur la figure 2, chaque élément déjà référencé sur la figure 1 et jouant un rôle identique dans les deux figures reprend la même référence. On distingue un capteur microfluidique comportant plus d'éléments que le capteur microfluidique représenté sur la figure 1. Le canal de prélèvement 2 alimente le mélangeur M et le réservoir 6, mais il alimente également plusieurs autres réservoirs en parallèle du réservoir 6. On voit par exemple un réservoir 12 comportant par exemple un réactif chimique qui peut être identique ou différent du réactif chimique 7. Le canal de prélèvement 2 comporte un bras supplémentaire 15 pour véhiculer l'eau depuis le conduit 3 vers le réservoir 12. Ce dernier est ensuite connecté au mélangeur M via un canal 16, qui peut contenir des constrictions qui servent a limiter et/ou contrôler le débit de réactif chimique entre le réservoir 12 et le mélangeur M. De la même manière que le réservoir 6, le réservoir 12 est également sous pression via le canal de prélèvement 2. On peut également prévoir d'autres réservoirs tels le réservoir 13 sur la figure 2 également alimenté en eau via le canal de prélèvement 2. Ce réservoir 13 peut contenir un agent de nettoyage tel qu'un acide par exemple. Cet acide peut servir à un nettoyage des canaux entre le mélangeur et l'analyseur jusqu'à l'orifice de sortie 11. On peut avoir également une multitude de réservoirs 13 disposés en parallèle, qui alimentent le mélangeur M de manière indépendante.

Les deux réservoirs représentés 12 et 13 sont connectés de façon indépendante au mélangeur M, la pression de ces réservoirs étant établie par le canal 15 lié directement au conduit 2. Par contre, on peut prévoir un autre réservoir 14 alimenté directement par le canal de prélèvement 2 et disposé en parallèle du réservoir 6, mais n'alimentant pas indépendamment (de façon autonome) le mélangeur M. Dans ce mode de réalisation, le réservoir 14 alimente le conduit 5 disposé entre le réservoir 6 et le mélangeur M. Le réservoir 14 peut contenir un réactif chimique identique ou différent du réactif chimique 7 contenu dans le réservoir 6. On peut avoir également une multitude de réservoirs 6 disposés en parallèle, qui alimentent le mélangeur M à travers un même conduit 5.

Les réservoirs additionnels 12, 13 et 14 sont optionnels et peuvent être envisagés de façon individuelle ou en combinaison les uns avec les autres. Les canaux reliant ces réservoirs au mélangeur M peuvent également être dimensionnés de façon à prédéterminer les proportions de mélange.

Selon un autre mode de réalisation avantageux de l'invention, on prévoit une mise sous pression indépendante en fluide du conduit d'un ou plusieurs réservoirs additionnels 12, 13 ou 14. Pour ce faire, une mise sous pression indépendante consiste à connecter directement le réservoir additionnel au conduit 3 au moyen d'un autre canal de prélèvement différent du canal de prélèvement 2. Par exemple, le réservoir 12 et/ou le réservoir 13 peuvent être directement alimentés, de façon indépendante, par le conduit 3 comme représenté par les canaux 27 et 28 en pointillés sur la figure 2. Les deux réservoirs 12 et 13 sont donc connectés de façon indépendante au mélangeur M, la pression de ces réservoirs étant établie directement par le conduit 3.

On distingue sur la figure 2 un réservoir optionnel de décharge 17 dans lequel est déversé le mélange utilisé pour la détection du chlore. Ce réservoir de décharge recueille également un éventuel fluide utilisé pour le nettoyage des canaux. En raison de la nature microfluidique du capteur selon l'invention, les volumes de réactifs et d'échantillon d'eau sont très faibles, et le fonctionnement autonome peut ainsi être assuré pour de longues périodes.

Le dispositif de la figure 2 est idéal pour un fonctionnement autonome et automatique. On distingue un module de gestion 18 comprenant une alimentation sous forme de batterie B notamment (optionnellement, le module de gestion peut être alimenté par une source d'énergie électrique externe) et une unité de traitement U équipée de moyens matériels et logiciels configurés pour commander différents composants électromécaniques du capteur microfluidique. Ces moyens logiciels et matériels peuvent comprendre un microprocesseur et/ou un microcontrôleur. En particulier le module de gestion 18 contrôle l'analyseur optique A ainsi que des micro vannes (ou micro valves) 19, 20 et 21 disposées respectivement sur les canaux entre le mélangeur M et les réservoirs 6, 12 et 13. Une micro vanne 22 est également disposée sur le canal de sortie 10.

Une mesure peut être réalisée de la manière suivante. On ouvre les vannes 19 et 22 de sorte que l'eau provenant du conduit via le canal de prélèvement 2 alimente le réservoir 6 qui pousse le réactif 7 vers le mélangeur M. L'eau pénètre également dans le mélangeur M directement via le canal de prélèvement 2b. Le mélange ainsi réalisé alimente l'analyseur A. On peut ensuite refermer la vanne 22 de façon à réaliser une mesure statique, ce fonctionnement convenant aux réactifs chimiques nécessitant un temps plus long de réaction. Si la vanne 22 reste ouverte, on réalise alors une mesure alors que le mélange circule dans l'analyseur A. A la fin de la mesure, on peut refermer les vannes 19 et 22 en attente d'une mesure ultérieure. On peut également prévoir un nettoyage du mélangeur M à la fin de la mesure ou à un autre moment. Pour ce faire, on ouvre la vanne 22 si elle était fermée ou on la maintient ouverte si elle était ouverte, tout en fermant la vanne 19. Dans ce cas, l'eau circule depuis le canal de prélèvement 2 jusqu'à l'orifice de sortie 11 via le mélangeur M et l'analyseur A. On laisse couler suffisamment longtemps pour que tout le résidu du réactif utilisé précédemment s'évacue. On ferme ensuite la vanne 22 pour revenir à un état initial.

Pendant la mesure, on peut éventuellement ouvrir la vanne 20 pour ajouter un autre réactif.

Pendant le nettoyage, on peut éventuellement ouvrir la vanne 21 pour introduire un agent de nettoyage.

On peut également prévoir une vanne (non représentée) disposée sur le canal de prélèvement 2 dans un des bras alimentant directement le mélangeur M ou l'un des réservoirs en eau.

Lorsqu'une mesure est réalisée, le résultat peut être sauvegardé en interne au sein du module de gestion 18 et/ou transmis par liaison filaire et/ou sans fil à un récepteur distant non représenté. L'unité de traitement U intègre donc des moyens de communications à distance. Le connecteur 23 peut comprendre une antenne pour une communication sans fil et/ou un connecteur à contact permettant de transférer des données à un appareil externe.

Sur la figure 3, on distingue un analyseur optique constitué par une source de lumière 24, un serpentin 25 rempli du mélange issu du mélangeur M et un détecteur optique 26. Le serpentin 25 est avantageusement réalisé dans la continuité du micro canal 8. Au lieu du serpentin 25 on peut imaginer toute autre cavité optique, de forme rectangulaire par exemple. La source de lumière et le détecteur peuvent comprendre des filtres optiques qui limitent le spectre de la lumière transmise à certaines zones d'intérêt du spectre optique. Typiquement, ces filtres optiques limitent la longueur d'onde de lumière à des longueurs d'onde où le réactif chimique (DPD pour chlore par exemple) absorbe le plus. D'autres filtres optiques peuvent être utilisés pour des mesures de référence à des longueurs d'onde différentes. Ces mesures de référence peuvent servir à éliminer la dégradation de réponse du capteur due à des changements possibles dans le chemin optique, ou à la diffusion de la lumière par des bulles et/ou des particules.

L'analyseur optique peut également comprendre d'autres éléments optiques, tels que des lentilles qui permettent une bonne collimation de la lumière provenant de la source de lumière. Des sources de lumière typiques produisent un cône de lumière. Chaque fois qu'un tel cône de lumière traverse une structure étroite telle un micro-canal, la plupart de la lumière frappe les parois et est diffusée ou absorbée. Des éléments optiques peuvent être utilisés pour assurer que la lumière traverse effectivement la partie du canal contenant le fluide à mesurer. Ces éléments optiques (comme par exemple non limitatif des lentilles, des diaphragmes, des réseaux de diffraction, des miroirs de type Bragg) peuvent être construits directement sur puce, en utilisant des techniques de microfabrication, ou peuvent comprendre des éléments extérieurs tels que des lentilles boules, des fibres à lentille, des réseaux de diffraction...

Le capteur microfluidique selon l'invention peut également comprendre d'autres types d'analyseurs pour effectuer des mesures sur l'échantillon d'eau. Celles-ci peuvent comprendre à titre d'exemple non limitatif des mesures de conductivité électrique, des mesures ampérométriques...

Les avantages du capteur microfluidique selon l'invention sont nombreux, on peut notamment citer :
- taille réduite,
- mesure fiable et normalisée,
- faible consommation de réactifs, coût d'utilisation réduit et très grande autonomie,
- maintenance limitée,
- coût d'étalonnage faible car la mesure est normalisée,
- peut être déployé dans des endroits éloignés pour effectuer en toute autonomie des mesures chimiques en continu sur de très longues périodes, et
- configuration intrinsèquement sûre.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif microfluidique pour analyser un fluide présent dans un conduit (3) sous une première pression, comprenant :
- un mélangeur (M) pour mélanger une quantité de fluide provenant du conduit (3) avec au moins une quantité de réactif (7) provenant d'au moins un réservoir (6),
- un analyseur (A) pour analyser le mélange ainsi constitué, le dispositif microfluidique comprenant en outre un canal (2) de prélèvement pour prélever une quantité de fluide dans le conduit (3), pour alimenter le mélangeur (M) et pour mettre sous pression ledit au moins un réservoir (6) qui pousse le réactif (7) vers le mélangeur (M) ;
le dispositif microfluidique étant **caractérisé en ce qu'**un orifice de sortie (11) de l'analyseur (A) est soumis à une seconde pression inférieure à la première pression dans le conduit, de sorte que le fluide transite de manière passive depuis le conduit (3), d'une part vers l'analyseur (A) via le mélangeur (M), et d'autre part vers ledit au moins un réservoir (6) ; le réservoir (6) contenant le réactif (7) et le mélangeur (M) subissent une pression dont la source est unique, cette source étant le conduit (3).

2. Dispositif selon la revendication 1, **caractérisé en ce que** le canal (2b) véhiculant le fluide vers le mélangeur (M) et le canal (2a) véhiculant le réactif (7) du réservoir vers le mélangeur, sont conformés de telle sorte que les proportions de mélange entre le fluide et le réactif du réservoir sont prédéterminées.

3. Dispositif selon la revendication 1 ou 2, **caractérisé en ce qu'**il comprend au moins une première vanne (19) dans un canal (5) du réservoir et une seconde vanne (22) dans un canal (10) de sortie menant vers l'orifice de sortie de l'analyseur.

4. Dispositif selon l'une quelconque des revendications précédentes, **caractérisé en ce qu'**il comprend en outre une troisième vanne dans le conduit (2) de prélèvement pour contrôler le flux dans le conduit de prélèvement.

5. Dispositif selon l'une quelconque des revendications précédentes, **caractérisé en ce que** l'analyseur (A) est une cellule optique.

6. Dispositif selon la revendication 5, **caractérisé en ce que** la cellule optique comprend au moins une source (24) de lumière filtrée, une cavité optique formée à partir d'un matériau transparent et véhiculant le mélange, et un détecteur (26) large bande.

7. Dispositif selon la revendication 5, **caractérisé en ce que** la cellule optique comprend au moins :
- une source (24) de lumière filtrée,
- des moyens pour guider la lumière depuis la source vers une cavité optique d'une puce microfluidique, cette cavité contenant le mélange,
- un détecteur (26) large bande, et
- des moyens pour guider la lumière depuis la puce microfluidique vers le détecteur large bande.

8. Dispositif selon la revendication 7, **caractérisé en ce que** les moyens pour guider la lumière comprennent l'un ou une combinaison des éléments suivants :
- fibre optique,
- guide d'onde obtenu par microfabrication, et
- guide d'onde liquide.

9. Dispositif selon la revendication 5, **caractérisé en ce que** la cellule optique comprend au moins :
- une source de lumière large bande,
- une cavité optique formée à partir d'un matériau transparent et véhiculant le mélange, et
- un détecteur associé à un filtre donné.

10. Dispositif selon la revendication 5, **caractérisé en ce que** la cellule optique comprend au moins :
- une source de lumière large bande,
- une cavité optique formée à partir d'un matériau transparent et véhiculant le mélange,
- un monochromateur, et
- un détecteur large bande.

11. Dispositif selon la revendication 10, **caractérisé en ce que** le monochromateur est un réseau de diffraction et/ou une roue a filtres.

12. Dispositif selon l'une quelconque des revendications précédentes, **caractérisé en ce que** ledit au moins un réservoir (6) de réactif est de type piston.

13. Dispositif selon l'une quelconque des revendications 1 à 11, **caractérisé en ce que** ledit au moins un réservoir de réactif est de type membrane souple.

14. Dispositif selon l'une quelconque des revendications 1 à 11, **caractérisé en ce que** ledit au moins un réservoir(6) de réactif est de type sachet souple de réactif.

15. Dispositif selon l'une quelconque des revendications précédentes, **caractérisé en ce que** le mélangeur (M) est un micro-mélangeur passif.

16. Dispositif selon l'une quelconque des revendications précédentes, **caractérisé en ce qu'**il comprend en outre un réservoir (17) de décharge situé à un orifice de sortie de l'analyseur.

17. Dispositif selon l'une quelconque des revendications précédentes, **caractérisé en ce que** la seconde pression est à la pression atmosphérique.

18. Dispositif selon l'une quelconque des revendications précédentes, **caractérisé en ce que** le canal (2) de prélèvement comporte une extrémité insérée dans le conduit de manière étanche, le reste du dispositif étant disposé à l'extérieur du conduit.

## Patentansprüche

1. Mikrofluidische Vorrichtung zur Analyse eines Fluids, das in einer Leitung (3) unter einem ersten Druck vorhanden ist, umfassend:
- einen Mischer (M), um eine Menge Fluid, die aus der Leitung (3) stammt, mit mindestens einer Menge Reagens (7), das aus mindestens einem Behälter (6) stammt, zu mischen,
- einen Analysator (A), um die so gebildete Mischung zu analysieren, wobei die mikrofluidische Vorrichtung außerdem einen Entnahmekanal (2) umfasst, um eine Menge Fluid aus der Leitung (3) zu entnehmen, um den Mischer (M) zu versorgen und um den mindestens einen Behälter (6) unter Druck zu setzen, der das Reagens (7) zum Mischer (M) drückt;
wobei die mikrofluidische Vorrichtung **dadurch gekennzeichnet ist, dass** eine Ausgangsöffnung (11) des Analysators (A) einem zweiten Druck, der geringer als der erste Druck in der Leitung ist, ausgesetzt wird, so dass das Fluid auf passive Weise von der Leitung (3) einerseits zum Analysator (A) über den Mischer (M) und andererseits zu dem mindestens einen Behälter (6) befördert wird, der Behälter (6), der das Reagens (7) enthält, und der Mischer (M) einem Druck ausgesetzt sind, dessen Quelle einmalig ist, wobei diese Quelle die Leitung (3) ist.

2. Vorrichtung nach Anspruch 1, **dadurch gekennzeichnet, dass** der Kanal (2b), der das Fluid zum Mischer (M) transportiert und der Kanal (2a), der das Reagens (7) des Behälters zum Mischer transportiert, derart ausgebildet sind, dass die Proportionen der Mischung zwischen dem Fluid und dem Reagens des Behälters vorbestimmt sind.

3. Vorrichtung nach Anspruch 1 oder 2, **dadurch gekennzeichnet, dass** sie mindestens ein erstes Ventil (19) in einem Kanal (5) des Behälters und ein zweites Ventil (22) in einem Ausgangskanal (10) umfasst, der zur Ausgangsöffnung des Analysators führt.

4. Vorrichtung nach einem der vorhergehenden Ansprüche, **dadurch gekennzeichnet, dass** sie außerdem ein drittes Ventil in der Entnahmeleitung (2) umfasst, um den Fluss in der Entnahmeleitung zu kontrollieren.

5. Vorrichtung nach einem der vorhergehenden Ansprüche, **dadurch gekennzeichnet, dass** der Analysator (A) eine optische Zelle ist.

6. Vorrichtung nach Anspruch 5, **dadurch gekennzeichnet, dass** die optische Zelle mindestens eine Quelle (24) von gefiltertem Licht umfasst, einen optischen Hohlraum der aus einem transparenten Material gebildet ist und die Mischung transportiert, und einen Breitbanddetektor (26).

7. Vorrichtung nach Anspruch 5, **dadurch gekennzeichnet, dass** die optische Zelle mindestens Folgendes umfasst:
- eine Quelle (24) von gefiltertem Licht,
- Mittel, um das Licht von der Quelle zu einem optischen Hohlraum eines mikrofluidischen Chips zu leiten, wobei dieser Hohlraum die Mischung enthält,
- einen Breitbanddetektor (26) und
- Mittel, um das Licht vom mikrofluidischen Chip zum Breitbanddetektor zu leiten.

8. Vorrichtung nach Anspruch 7, **dadurch gekennzeichnet, dass** die Mittel zum Leiten des Lichts eines oder eine Kombination der folgenden Elemente umfassen:
- Glasfaser,
- einen Wellenleiter, der durch Mikroherstellung erhalten wurde, und
- einen flüssigen Wellenleiter.

9. Vorrichtung nach Anspruch 5, **dadurch gekennzeichnet, dass** die optische Zelle mindestens Folgendes umfasst:
- eine Breitband-Lichtquelle,
- einen optischen Hohlraum, der aus einem transparenten Material gebildet ist und die Mischung transportiert; und
- einen Detektor, der mit einem gegebenen Filter assoziiert ist.

10. Vorrichtung nach Anspruch 5, **dadurch gekennzeichnet, dass** die optische Zelle mindestens Folgendes umfasst:
- eine Breitband-Lichtquelle,
- einen optischen Hohlraum, der aus einem transparenten Material gebildet ist und die Mischung transportiert,
- einen Monochromator und
- einen Breitbanddetektor.

11. Vorrichtung nach Anspruch 10, **dadurch gekennzeichnet, dass** der Monochromator ein Beugungsgitter und/oder ein Filterrad ist.

12. Vorrichtung nach einem der vorhergehenden Ansprüche, **dadurch gekennzeichnet, dass** der mindestens eine Behälter (6) von Reagens vom Typ Kolben ist.

13. Vorrichtung nach einem der Ansprüche 1 bis 11, **dadurch gekennzeichnet, dass** der mindestens eine Behälter von Reagens vom Typ flexible Membran ist.

14. Vorrichtung nach einem der Ansprüche 1 bis 11, **dadurch gekennzeichnet, dass** der mindestens eine Behälter (6) von Reagens vom Typ flexibler Beutel von Reagens ist.

15. Vorrichtung nach einem der vorhergehenden Ansprüche, **dadurch gekennzeichnet, dass** der Mischer (M) ein passiver Mikromischer ist.

16. Vorrichtung nach einem der vorhergehenden Ansprüche, **dadurch gekennzeichnet, dass** sie außerdem einen Entladungsbehälter (17) umfasst, der sich an einer Ausgangsöffnung des Analysators befindet.

17. Vorrichtung nach einem der vorhergehenden Ansprüche, **dadurch gekennzeichnet, dass** der zweite Druck dem atmosphärische Druck entspricht.

18. Vorrichtung nach einem der vorhergehenden Ansprüche, **dadurch gekennzeichnet, dass** der Entnahmekanal (2) ein Ende aufweist, das auf dichte Weise in die Leitung eingeführt ist, wobei der Rest der Vorrichtung außerhalb der Leitung angeordnet ist.

## Claims

1. A microfluidic device for analyzing a fluid present in a pipe (3) under a first pressure, comprising:
- a mixer (M) for mixing an amount of fluid coming from the pipe (3) with at least one amount of a reactant (7) coming from at least one tank (6),
- an analyzer (A) for analyzing the mixture thus constituted,
the microfluidic device further comprising a sampling channel (2) for drawing an amount of the fluid in the pipe (3), for supplying the mixer (M) and for pressurizing said at least one tank (6) that pushes the reactant (7) towards the mixer (M);
the microfluidic device being **characterized in that** an outlet port (11) of the analyzer (A) is subjected to a second pressure lower than the first pressure in the pipe, such that the fluid passively moves from the pipe (3), on the one hand towards the analyzer (A) via the mixer (M), and on the other hand towards said at least one tank (6); the tank (6) containing the reactant (7) and the mixer (M) are subjected to a pressure the source of which is unique, this source being the pipe (3).

2. The device according to claim 1, **characterized in that** the channel (2b) conveying the fluid to the mixer (M) and the channel (2a) conveying the reactant (7) from the tank to the mixer, are shaped such that the mixture proportions between the fluid and the reactant of the tank are predetermined.

3. The device according to claim 1 or 2, **characterized in that** it comprises at least a first valve (19) in a channel (5) of the tank and a second valve (22) in an outlet channel (10) leading to the outlet port of the analyzer.

4. The device according to any one of the preceding claims, **characterized in that** it further comprises a third valve in the sampling pipe (2) for controlling the flow in the sampling pipe.

5. The device according to any one of the preceding claims, **characterized in that** the analyzer (A) is an optical cell.

6. The device according to claim 5, **characterized in that** the optical cell comprises at least one filtered light source (24), an optical cavity made from a transparent material and conveying the mixture, and a broadband detector (26).

7. The device according to claim 5, **characterized in that** the optical cell comprises at least:
- one filtered light source (24),
- means for guiding light from the source to an optical cavity of a microfluidic chip, this cavity containing the mixture,
- one broadband detector (26), and
- means for guiding light from the microfluidic chip to the broadband detector.

8. The device according to claim 7, **characterized in that** the means for guiding light comprise one or a combination of the following elements:
- an optical fiber,
- a waveguide obtained by micro-fabrication, and
- a liquid waveguide.

9. The device according to claim 5, **characterized in that** the optical cell comprises at least:
- one broadband light source,
- one optical cavity made from a transparent material and conveying the mixture, and
- one detector associated with a given filter.

10. The device according to claim 5, **characterized in that** the optical cell comprises at least:
- one broadband light source,
- one optical cavity made from a transparent material and conveying the mixture,
- one monochromator, and
- one broadband detector.

11. The device according to claim 10, **characterized in that** the monochromator is a diffraction grating and/or a filter wheel.

12. The device according to any one of the preceding claims, **characterized in that** said at least one reactant tank (6) is of the piston type.

13. The device according to any one of claims 1 to 11, **characterized in that** said at least one reactant tank is of the flexible membrane type.

14. The device according to any one of claims 1 to 11, **characterized in that** said at least one reactant tank (6) is of the reactant flexible bag type.

15. The device according to any one of the preceding claims, **characterized in that** the mixer (M) is a passive micromixer.

16. The device according to any one of the preceding claims, **characterized in that** it further comprises a discharge tank (17) located at an outlet port of the analyzer.

17. The device according to any one of the preceding claims, **characterized in that** the second pressure is at atmospheric pressure.

18. The device according to any one of the preceding claims, **characterized in that** the sampling channel (2) comprises an end inserted in the pipe in a sealed manner, the rest of the device being disposed outside the pipe.
